(19) Europäisches Patentamt

European Patent Office

Office européen des brevets

(11) **EP 2 928 107 A1**

(12) **EUROPEAN PATENT APPLICATION**

(43) Date of publication:
**07.10.2015 Bulletin 2015/41**

(51) Int Cl.:
*H04L 1/20* (2006.01)          *H04L 12/24* (2006.01)
*H04B 3/54* (2006.01)          *H04M 3/30* (2006.01)

(21) Application number: **14305473.2**

(22) Date of filing: **01.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT
92100 Boulogne-Billancourt (FR)**

(72) Inventors:
• **Drooghaag, Benoit
2018 Antwerpen (BE)**
• **Wahibi, Issam
2018 Antwerpen (BE)**

(74) Representative: **D'Halleweyn, Nele Veerle Trees Gertrudis et al
Arnold & Siedsma
Bezuidenhoutseweg 57
2594 AC The Hague (NL)**

(54) **An interference detection method and system**

(57) The invention provides methods and related systems for determining interference on or in a first communication system, operable in a first frequency band and based on a first communication method by a second communication system, operable in a second frequency band and based on a second communication method, wherein said first and second frequency band at least partially overlap and said first and second communication method are at least in part different; the method comprising the steps of: loading parameters of said first communication system; and determining or analyzing said interference based on said parameters by exploiting said differences in said communication methods.

Figure 1

**Description**

Field of Invention

The invention relates to the field of methods and related software and storage media for determining interference on a first communication system by a second communication system and systems adapted or suitable for determining or analysing such interference, in particular network analysers.

More in particular, embodiments of the invention relate to the field of methods and related software and storage media for determining interference on a first communication system by a second communication system, systems adapted or suitable for determining or analysing such interference, and in particular network analysers.

Background

With the increasing deployment of IPTV solutions, Video-On-Demand offers or Triple-play services, both the system performances and the customer support becomes more and more exigent, particularly on Digital Subscriber Lines (DSL). The physical link, which transports information through wire lines up to the end user, is known to be the bottleneck for the Quality of Service. Hence, it is of importance to be able to diagnose sources of physical problems and take actions to improve the performances.

One potential problem impacting DSL lines that has recently appeared, is the interference with Power-Line Communication (PLC) adapters. Those devices are used to transmit data from one place in the customer house to another place through the in-house power line network, as a typical alternative for Wifi. Those adapters are usually packaged as transparent Ethernet-to-PowerLine converters. They are nowadays largely distributed in various shops or even distributed directly by the operators. One of the very frequent use cases is to connect the set-top-box, usually located in the living room, to the residential gateway (DSL modem) which is located somewhere else in the house, when the customer wants to avoid installing a new Ethernet cable or when Wifi is not possible. The use case is not limited to the IPTV set-top-box. PLC adapters can be used to interconnect all equipment that can be connected by Ethernet (game console, computers, network disks, printers ...).

In practice, when a customer suffers from such interferences, his DSL line will be unstable (frequent bursts of errors resulting in visible artifacts on the IPTV video stream or even spontaneous resynchronizations of the line, leading to service interruption between 30 seconds and 2 minutes). The customer will then call the operator helpdesk to complain. As the problem is not easy to detect, the complaint will be escalated to higher support level, where eventually a very skilled expert could suspect the problem by looking at some data reported by the modem. Most of the time, a technician will be dispatched at the customer premises (truck roll) to confirm (or identify) the problem and solve it (for example, by moving the PLC adapter to another wall plug, if possible). This procedure is time-consuming and very costly for the operator, but also cumbersome for the customer who will have to arrange an appointment with the technician. It is also a typical reactive process, initiated by a complaint at the operator helpdesk. Before this call, the operator cannot detect the problem.

Summary

Embodiments of the invention are based *inter alia* on the insight that automatic methods to remotely detect such kind of interferences are needed, preferably (entirely) based on the standardized parameters that are reported by the modems.

Embodiments of the invention aim to provide, in the field of communication system interference, remotely diagnosing of sources of physical problems of such interferences and taking actions to improve the performance. This will help the operators to gain in service quality as well as to save money and time by not involving human interventions for all types of requests. In particular embodiments of the invention the focus may be on the detection of HomePlug interferences impacting a VDSL2 signal as those interferences result in both performance degradation (loss of bitrate) and stability degradation (transmission errors and service interruption due to link retrains).

According to a first aspect of the invention there is provided a method for determining or analysing at a remote system interference in a first communication system caused by a second communication system. The first communication system is operable in a first frequency band and based on a first communication method. The second communication system is operable in a second frequency band and based on a second communication method. The first and second frequency band at least partially overlap and said first and second communication method are at least in part different. The remote system is connected with the first communication system via a connection. The method comprises the steps of: obtaining through said connection at least one parameter of said first communication system; and determining or analysing said interference based on said at least one parameter by exploiting the differences between the first and second communication method.

The at least one parameter may comprise a performance parameter or an operational parameter. The determining of the interference may be solely based on the at least one parameter.

According to a preferred embodiment the at least one parameter may comprise a performance parameter such as the Signal-to-Noise ratio (SNR) and/or bit loading and/or Quit Line Noise (QLN). Optionally the performance parameter may be a time averaged value of the SNR or bit loading or QLN or a computed estimate of the SNR or bit loading or QLN based on the one or more of the available parameters being the SNR and/or bit loading and/or QLN and/or based on operational parameters such as gain allocation. The performance parameter may also be representative for a difference between the (computed estimates of) SNR and/or bit loading and/or QLN and a (theoretic determined) reference values achievable for those absent interference. More generally the at least one parameter is anyone of the following: a parameter representative for the Signal-to-Noise ratio (SNR) of a signal received by said first communication system; a parameter representative for the bit loading of a signal received by said first communication system; a parameter representative for the Quit Line Noise (QLN) of a signal received by said first communication system; a computed estimate of the SNR or bit loading or QLN based the SNR and/or bit loading and/or QLN of signals received by said first communication system and/or based on operational parameters; and/or a parameter representative for a difference between the SNR and/or bit loading and/or QLN of signals received by said first communication system and reference values achievable for the SNR and/or bit loading and/or QLN absent interference.

According to an exemplary embodiment said first and second communication methods are different in at least their frequency spectra in an overlap frequency band in which said first and second frequency band overlap; and said determining of said interference is based on comparing differences in said performance parameters across said overlap frequency band thereby taking into account the difference in frequency spectra.

According to a further developed embodiment thereof within said overlap frequency band said second communication method has one or more frequency bands with a substantially lower up to zero channel response; and said determining of said interference is based on comparing the average performance in the neighbourhood of said frequency bands with the average performance in said frequency bands.

According to another exemplary embodiment said first and second communication method are different in that only a portion of their respective carriers or carrier frequencies overlap; and said determining of said interference being based on comparing differences in said performance parameters between overlapping and non-overlapping carriers or carrier frequencies.

According to a further developed embodiment thereof said first and second communication method are different in that the spacing between their carriers are different; and said determining of said interference being based on comparing differences in said performance parameters on a per carrier or per carrier group basis thereby taking into account the difference in spacing between their carriers, preferably by determining a (optionally repetitive) pattern in said difference related to said difference in spacing.

According to a further developed embodiment any of the above embodiments can be combined in that said determined (intermediate) interferences of each of said methods or resulting computations (averaging, computed differences, determined pattern), estimations, comparisons of any of said methods are combined to determine a final interference. According to a further developed embodiment thereof one or more said determined (intermediate) or combined interferences or resulting computations (averaging, computed differences, determined pattern), estimations, comparisons of any of the preceding methods are further exploited by a Bayesian network method, further taking into account other indicators for such interference to determine a further final interference.

In an exemplary embodiment the first communication system is a DSL system and the second communication system is a power line communication (PLC) system, e.g. a HomePlug system.

According to another aspect of the invention there is provided a system adapted or suited to perform one or more steps of any one of the embodiments of the method disclosed above.

According to yet another aspect of the invention there is provided a system adapted or suitable for determining interference in a first communication system by a second communication system, said first communication system being operable in a first frequency band and based on a first communication method, said second communication system being operable in a second frequency band and based on a second communication method, wherein said first and second frequency band at least partially overlap and said first and second communication method are at least in part different, the first communication system being connected to the system via a connection. The system comprises a data collector adapted for obtaining through said connection at least one parameter of said first communication system; and a processor adapted for determining said interference based on said at least one parameter by exploiting the differences between the first and second communication method.

The at least one parameter may be e.g. anyone of the following: a parameter representative for the signal-to-noise ratio (SNR) of a signal received by said first communication system; a parameter representative for the bit loading of a signal received by said first communication system; a parameter representative for the QLN of a signal received by said first communication system; a computed estimate of the SNR and/or bit loading and/or QLN based the SNR and/or bit loading and/or QLN of signals received by said first communication system and/or based on one or more operational parameters; and/or a parameter representative for a difference between the SNR and/or bit loading and/or QLN of signals received by said first communication system and reference values achievable for those absent interference.

In an exemplary embodiment said first and second communication methods are different in at least their frequency spectra in an overlap frequency band in which said first and second frequency bands overlap; the system further is adapted for determining said interference based on comparing differences in said at least one parameter across said overlap frequency band. In an exemplary embodiment within said overlap frequency band said second communication method has one or more frequency bands with a substantially lower up to zero channel response; and the system is adapted for determining said interference based on comparing an average performance in a neighbourhood of said one or more frequency bands with an average performance in said one or more frequency bands.

In an exemplary embodiment said first and second communication method are different in that only a portion of their respective carrier frequencies overlap; and the system further is adapted for determining said interference based on comparing differences in said at least one parameter between carriers between carriers with overlapping and non-overlapping carrier frequencies. In an exemplary embodiment said first and second communication method are different in that a spacing between their carriers is different; and wherein the system is adapted for determining said interference based on comparing differences in said at least parameter on a per carrier or per carrier group basis thereby taking into account the difference in said spacing.

In a preferred embodiment the system is a network analyser.

According to a further aspect of the invention, there is provided a computer program, a computing device or computer or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically an ordinary in-house network installation based on PLC adapters, with electro-magnetic coupling between power lines and phone line.
Figure 2 shows a HomePlug PSD mask with all radio hams bands notched.
Figure 3 shows the downstream SNR of a DSL line impacted by HomePlug interference.
Figure 4 shows the downstream bit loading of a DSL line impacted by HomePlug interference.
Figure 5 shows the time-averaged bit loading, without (upper curve) and with (lower curve) HomePlug interference.
Figure 6 shows the downstream bit loading measured (solid) and theoretical (dashed) for which the HomePlug interferences are removed.
Figure 7 illustrates schematically the first and second communication system, the interference and the remote system and its connection.

Description of embodiments

Most of the PLC adapters commercially available today follow the "HomePlug" standard that defines the physical layer properties (modulation type, transmitted power, etc....) used for transmissions over the power network. This standard allows transmission over a large spectrum ranging from 2MHz to 28MHz (HomePlug AV) or even up to 100MHz (Home-Plug AV2). This spectrum largely overlaps with the spectrum used for VDSL2 transmission over the phone lines (0 to 17MHz). As in nearly every house, the power lines and the phone line usually enter the house at the same place (typically in the garage or in the basement), the physical proximity between those 2 media will create electro-magnetic coupling (crosstalk) between them such as the VDSL2 signals carried over the phone line will suffer from interferences coming from the HomePlug signals carried over the power lines (and vice versa).

HomePlug interferences impacting the VDSL2 signal result in both performance degradation (loss of bitrate) and stability degradation (transmission errors and service interruption due to link retrains). This problem becomes crucial when vectoring is deployed. Indeed, vectoring is a technique that allows removing the noise coming from the other neighbouring VDSL2 lines, resulting in a lower noise level and higher performance. But since the noise level is lowered, the lines become more vulnerable towards non-VDSL2 noises (aka "alien noise") such as Radio Frequency Interference (RFI) and HomePlug interferences.

The interferences between HomePlug and VDSL2 have been described in the literature, covering coupling mechanism, impact on both technologies as well as mechanism to improve the coexistence between them (interference avoidance).

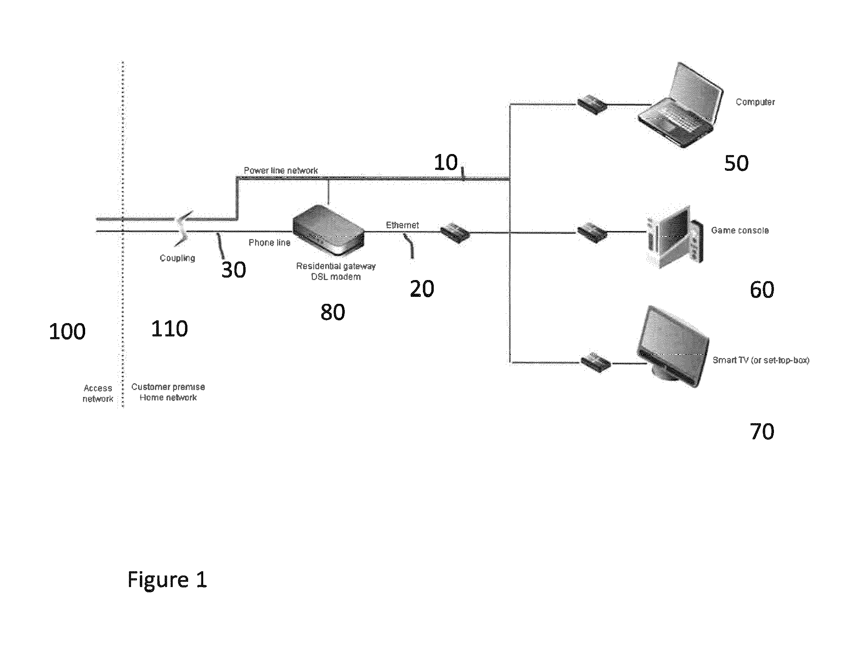

An example of installation in which embodiments of he invention may be used is illustrated in Figure 1. Figure 1 shows an access network 100 and a customer premise network 110 with a powerline network 10 and portions of a DSL network, namely phone part 30 and after the modem 80 the Ethernet part 20. To the powerline network a plurality of devices like a computer 50, a game console 60 or a smart TV 80 can be coupled.

More in particular, embodiments of the invention are suitable for determining interference on a first communication system, e.g. a line, by a second communication system, e.g. a line, arranged in any configuration as long as they interfere in part for instance due to electro-magnetic coupling. An example of such interfering systems is a DSL and PLC system.

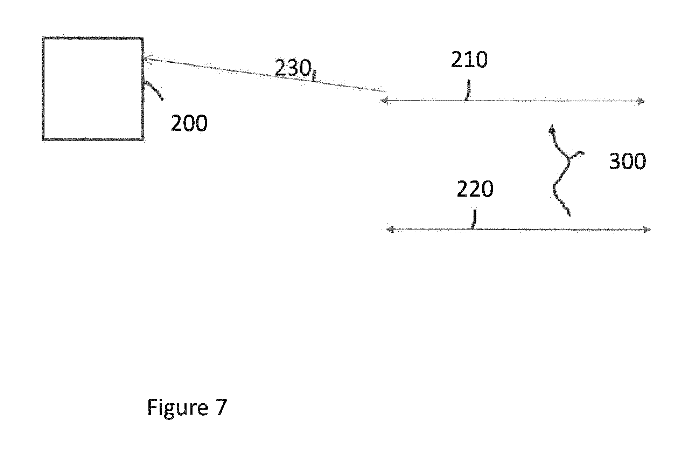

An embodiment of the invention, illustrated in Figure 7, provides a method for analysing at a remote system 200 interference 300 on a first communication system 210, operable in a first frequency band and based on a first communication method, by a second communication system 220, operable in a second frequency band and based on a second communication method, wherein said first and second frequency band at least partially overlap and said first and second communication method are at least in part different. The method, performed at the remote system, connected with the first communication system via a connection 230 comprises the steps of: obtaining through said connection parameters of said first communication system; and determining said interference based on said parameters by exploiting said differences in said communication methods.

Two further embodiments of such method are illustrated and are preferably combined to improve the diagnosis reliability, but if one of them is not possible for any technical reason, the other can still be used alone.

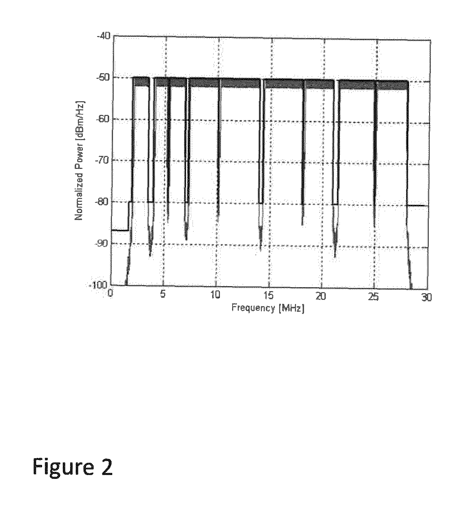

A first of said further embodiments is based on detection of a HomePlug PSD mask in VDSL2 parameters. As shown on Figure 2, the Power-Spectral-Density (PSD) mask defined in the HomePlug standard shows large power reductions ("notches") in several frequency bands that correspond to amateur radio (aka "ham radio") bands. This power reduction has been defined on purpose to avoid interference between HomePlug transmission and amateur radio transmission. When a VDSL2 line suffers from HomePlug interference, the impact will be on the portion of the spectrum that is common to both technologies (for example, 2 MHz to 17 MHz) but the interference level will be much lower inside the bands that are notched in the spectrum of the disturber (the HomePlug device in this case). The first embodiment of the invention consists therefore in detecting an abnormally low level of interference (or a high level of signal-to-noise ratio, SNR) in the regions that are notched in the HomePlug spectrum.

The second of said further embodiments is based on detection of HomePlug carrier spacing in VDSL2 parameters. Just like DSL, Homeplug relies on OFDM-like modulation. Those modulation techniques involves a large number of regularly spaced "carriers" that are amplitude- and phase-modulated to transmit information. Whereas the carrier spacing typically used in VDSL2 is 4.3125 kHz, the carrier spacing used for HomePlug is 24.41 kHz. The VDSL2 carriers that are closed to the HomePlug carriers will be more impacted that the VDSL2 carriers that fall just in between 2 HomePlug carriers. As consequence, it is possible to observe performance degradation (like a reduction of SNR or bit loading) that will follow a repetitive pattern, with a repetition period equal to the ratio of the carrier spacing used in the 2 different technologies (in this case, 24.41/4.3125 = 5.66). In other words, it will be possible to observe on the parameters collected from the DSL modem, a repetitive reduction of performance (SNR or bit loading) that repeats itself every 5.66 carriers. The detection of such pattern is complicated by the parameters accuracy (quantification step or subcarrier grouping) defined in the ITU-T VDSL2 standards. Some methods that make it possible are discussed in the various embodiments. Note that the 30a VDSL2 profile uses a carrier spacing of 8.625 kHz but this profile is in general not used, and even not supported by some system vendors.

As described before combination of the two methods is preferred. If the two phenomena described above are detected, the interference of HomePlug adapters can be diagnosed with a high confidence. However, in some cases, it may not be possible to apply both methods. For example, some other existing standards for PLC communication (like UPA) do not impose a PSD notching for ham radio bands, making possible for the operator or even the end-customer to disable it (resulting is some performance gain in PLC communication). Theoretically speaking, the 2 carrier spacing could be too close between the DSL and PLC systems to make the use of the second method difficult or not possible. Nevertheless, if only a single method is possible, the HomePlug interference can still be diagnosed, with a lower confidence that if the two methods would be available.

The two embodiments are now described in more detail. First the embodiment based on the detection of HomePlug PSD mask in VDSL2 parameters is discussed. As it can be seen on Figure 2, the HomePlug PSD mask consists in a flat level at -50 dBm/Hz between 2 MHz and 28 MHz, with several narrow bands limited to -80 dBm/Hz. Those bands correspond to the ITU official radio amateur bands listed below (restricted to the HomePlug spectrum).

| Radio Band | Frequency Range (MHz) | DSL usage |
|---|---|---|
| 80m | 3.5 - 4 | DS1 & US1 |

(continued)

| Radio Band | Frequency Range (MHz) | DSL usage |
|---|---|---|
| 60m | 5.25 - 5.45 | DS2 |
| 40m | 7-7.3 | DS2 |
| 30m | 10.1 - 10.15 | US2 |
| 20m | 14 - 14.35 | DS3 |
| 17m | 18.068 - 18.168 | - (typically not used) |
| 15m | 21 - 21.45 | - (typically not used) |
| 12m | 24.89 - 24.99 | - (typically not used) |

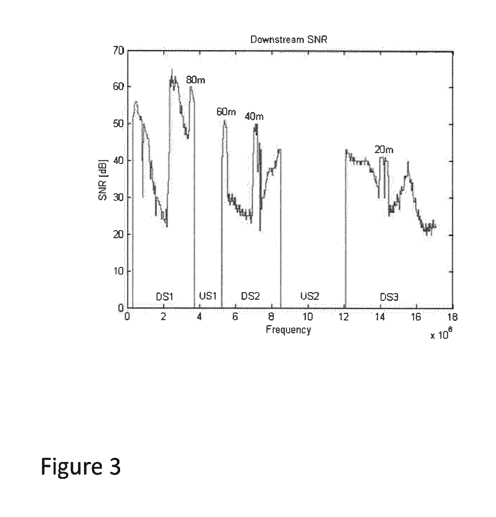

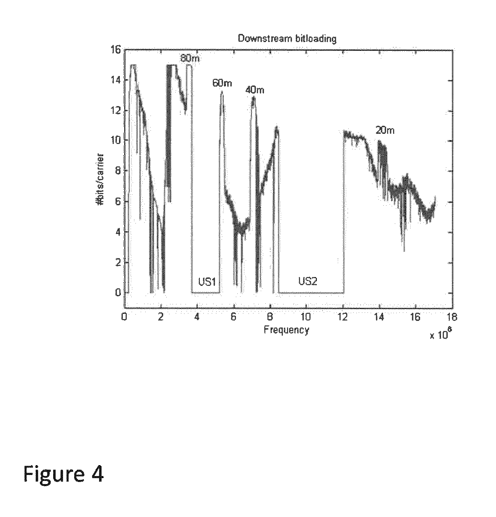

Looking at the DSL signals transmitted over the phone line, it is worth to notice that mainly the downstream signals (travelling from the central office to the customer premises) will be affected, since those signals are arriving in the house after being attenuated by the phone line. They are therefore more sensitive to electro-magnetic interferences present in the house environment. Following this reasoning, the downstream signal-to-noise ratio of the DSL signal should be degraded everywhere from the beginning of the HomePlug spectrum (2 MHz) to the end of the DSL spectrum (17 MHz), excepted in the notched ham radio bands that overlap with the DSL downstream bands (part of the 80m, the 60m, 40m and 20m bands), where the SNR should be significantly better. This is indeed what can be observed on the SNR of a line for which the interference problem with a PLC adapter has been confirmed. As one can see on Figure 3, the SNR is indeed significantly higher in the narrow notched bands foreseen in the HomePlug standards compared to the rest of the spectrum where the interferences exist. A similar observation can be done on the bit loading, as one can see on Figure 4. This is as expected since the bit loading is, by first approximation, directly proportional to the SNR (rule of thumb for each carrier: SNRi = 10dB + 3*bi or bi = (SNRi-10)/3 where bi is the number of bits loaded on carrier i). The bit loading is less accurate than the SNR since it has a granularity of 1 bits (corresponding to 3dB of SNR) and is limited to a maximum of 15bits per carrier. An algorithm that can automatically detect a higher SNR (or bit loading) in the ham radio bands could be written as follows (x and y are configuration parameters):

- for each of the ham radio bands overlapping with the DSL DS bands:

   compute the average SNR (or bit loading) for all the carriers inside the ham radio band;
   compute the average SNR (or bit loading) for the x carriers located at the left of the ham radio band and the x carriers located at the right;
   if the first average is higher than the second one (plus a margin of y dB), the SNR (or bit loading) is considered significantly higher in this radio ham band;

- if a significantly higher SNR (or bit loading) has been detected in at least one of the ham radio bands, an interference with an HomePlug adapter is suspected;
- optionally, a confidence parameter in the detection can be computed based on the number of bands for which the SNR or bit loading are detected to be significantly higher and on the total number of ham radio bands overlapping the DSL DS bands (for example, if the SNR is detected to be significantly higher in 3 ham radio bands out of 4, the confidence can be estimated to 75%).

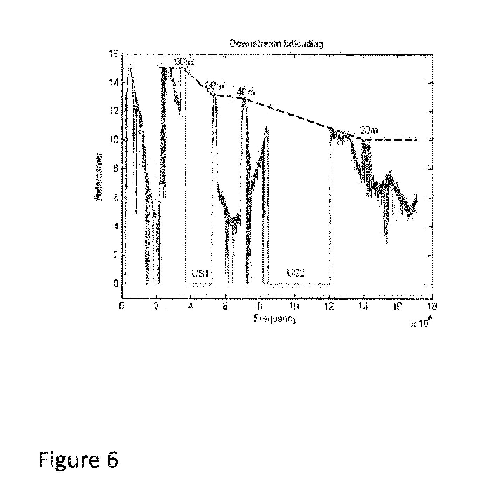

A refinement to this method can consist in quantifying the difference of bit loading (or SNR) between the regions where the HomePlug interferences are present and the regions where they are not. This allows quantifying the impact of the interferences on the DSL bitrate. A simple method to achieve this is to compute a "theoretical" bit loading (bi_th) (or SNRi_th) for which the impact of the HomePlug is removed. This is done by interpolation between the maxima measured in each ham radio band, as illustrated on Figure 6. At the left of the first maximum and at the right of the last maximum, the bit loading (or SNR) is flatly extrapolated till the lower limit of the HomePlug spectrum (2 MHz) and the upper limit of the VDSL2 spectrum (17 MHz). The bitrate impact can then be calculated as follows:

$$\text{Bitrate\_Impact} = SR * \sum_i (b_{i_{th}} - b_i)$$

Or if the SNR is used:

$$\text{Bitrate\_Impact} = SR * \frac{1}{k} * \sum_i (SNR_{i_{th}} - SNR_i)$$

Where SR is the symbol rate (typically 4000 for VDSL2), k is the average increase of SNR needed to load 1 bit (typically 3dB/bit) and the carrier index i belongs to the carriers that are common to the VDSL2 DS bands and the HomePlug spectrum, excluding the notched ham radio bands.

The second embodiment of the invention is based on detection of HomePlug carrier spacing in VDSL2 parameters. Since HomePlug uses a carrier spacing of 24.41 kHz and DSL typically uses 4.3125 kHz, it is expected that an increase of interference on the DSL line will be visible every 5 to 6 carriers (24.41/4.3125 = 5.66). The increase of interference should be visible either as an increase of the Quiet-Line-Noise (QLN) or a decrease of the SNR or bit loading. In the case of DSL, following the G.993.2 ITU-T VDSL2 standard, the carrier data such as QLN and SNR are not reported for each carrier but per subcarrier group. In the case of the 17 MHz profile of VDSL2, the subcarrier group size is equal to 8. It means that the QLN and SNR are reported per group of 8 carriers, which corresponds to the average level between those 8 carriers. This mechanism may be implemented in order to reduce the size of the parameters to be reported by the modems. However, for the problem to be tackle in certain embodiments of the invention, this might be a restriction as it means that at least 1 HomePlug carrier will fall in every DSL subcarrier group, such that the repetition period of 5.66 carriers will not be visible anymore. For this standard hence the use of QLN and SNR for the detection of HomePlug interferences based on the carrier spacing detection might be excluded. In an alternative embodiment it is considered that the bit loading is available for each individual carrier. However as the bit loading represents the number of bits loaded on a carrier, it is represented as an integer. As mentioned previously, this quantification step of 1 bit corresponds to 3dB of SNR. The lack of resolution may make the detection of HomePlug interference through a single bit loading measurement less preferred. In more advantageous embodiments the SNR estimation may be refined by taking into account the gains allocations (gi) and/or the averaging over time of the bit loading.

Now an exemplary embodiment which uses for the SNR estimation bit loading (bi) and gains (gi) is demonstrated. The VDSL2 standard foresees that the transmitted power over each carrier can be finely tuned via a gain adjustment between +2.5dB and -14.5dB. The purpose of this is to tune the SNR to what is strictly needed to load the desired number of bits. Knowing those gains adjustments for each carrier (gi) together with the number of bits loaded (bi), it is possible to compute a refined SNR estimation by the following formula:

$$SNRi = 10 + 3*bi - gi$$

This solution offers a way to detect HomePlug interferences via a single measurement, at the cost of the collection of an extra-parameter (gi) which is usually not used for diagnosis purpose.

Another exemplary embodiment uses for SNR estimation time-averaging of the bit loading, and is now further detailed. The bitrate resolution is improved, beyond the quantification step, by taking several measurements over time (for example, every 2 minutes) and compute the average value, carrier per carrier. Indeed, thanks to the bit swap mechanism implemented in DSL, the bit loading is continuously adapted by the modems to fit to varying noise condition and guarantee that the SNR margin is continuously equalized over all the carriers.

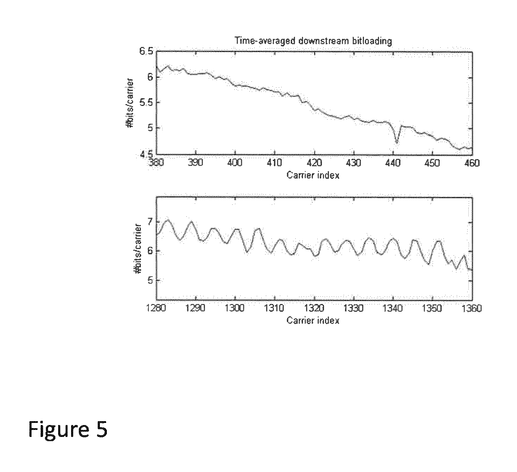

The result of such an averaging is shown on Figure 5. The upper curve shows the result for a frequency band that is not impacted by HomePlug interference (below 2 MHz). The lower curve shows the result for a frequency band that is impacted. As one can see, a repetitive pattern at the expected repletion frequency (5 to 6 carriers) is clearly visible.

In any of the different embodiments described above to recover an accurate SNR or bit loading, state-of-the-art algorithms can be used to automatically detect the presence of a repetitive pattern at a given repetition rate. Those algorithms include auto-correlation, cepstrum, all kinds of pitch detection algorithms like the YIN estimator, ...

In a preferred embodiment a combination of the two methods may be considered, although each of the methods (or their refinements or specific improvements) can also be used alone, or in combination with still other methods. The two methods proposed (PSD mask detection and carrier spacing detection) can be combined in order to provide a more reliable diagnosis. Each method can have 3 outputs: an interference problem is detected, or the interference problem not detected, or the method could not be run (for example, the required data could not be collected or are invalid). For the later case, the method may return e.g. "Unknown" as output.

In an exemplary embodiment the two methods are combined by building an arbitrary table associating a probability of detecting HomePlug interference to the 3 states of each method. An example of such a table is shown below.

| PSD mask \ Carrier spacing | Detected | Not detected | Unknown |
|---|---|---|---|
| Detected | 99% | 50% | 75% |

(continued)

| PSD mask \ Carrier spacing | Detected | Not detected | Unknown |
|---|---|---|---|
| Not detected | 50% | 1% | 5% |
| Unknown | 75% | 5% | 10% |

Considering the values of this table, the probability of suffering from HomePlug interference is equal to 99% if both methods have detected the problem. It is equal to 75% of one of the methods has detected the problem and the other method could not be run. It is equal to 50% in the case the two methods return contradictory output.

According to another exemplary embodiment the two methods are either combined or taken separately while taking into account other symptoms (typically the expected symptoms of a line suffering from HomePlug interferences, like impulse noise and spontaneous resynchronization). According to a possible embodiment thereof a Bayesian Network is relied upon. Such a method, based on conditional probabilities is naturally robust to missing information (for example, when a method cannot be run for any reason).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

**1.** A method for determining at a remote system interference in a first communication system caused by a second communication system, said first communication system being operable in a first frequency band and based on a first communication method, said second communication system being operable in a second frequency band and based on a second communication method, wherein said first and second frequency band at least partially overlap and said first and second communication method are at least in part different, said remote system being connected with the first communication system via a connection, the method comprising the steps of:

obtaining through said connection at least one parameter of said first communication system; and
determining said interference based on said at least one parameter by exploiting the differences between the first and second communication method.

2. The method of claim 1, wherein said at least one parameter is anyone of the following:

   a parameter representative for the Signal-to-Noise ratio (SNR) of a signal received by said first communication system;
   a parameter representative for the bit loading of a signal received by said first communication system;
   a parameter representative for the Quit Line Noise (QLN) of a signal received by said first communication system;
   a computed estimate of the SNR and/or bit loading and/or QLN based the SNR and/or bit loading and/or QLN of signals received by said first communication system and/or based on one or more operational parameters; and/or
   a parameter representative for a difference between the SNR and/or bit loading and/or QLN of signals received by said first communication system and reference values achievable for those absent interference.

3. The method of claim 1 or 2, wherein said first and second communication methods have a first and second different frequency spectra in an overlap frequency band in which said first and second frequency bands overlap; and wherein said determining of said interference is based on comparing a difference in said at least one parameter across said overlap frequency band thereby taking into account said first and second different frequency spectra.

4. The method of claim 3, wherein within said overlap frequency band, said second communication method has one or more frequency bands with a substantially lower up to zero channel response; and wherein said determining of said interference is based on comparing an average performance in a neighbourhood of said one or more frequency bands with an average performance in said frequency bands.

5. The method of claim 1 or 2, wherein said first and second communication method are different in that only a portion of their respective carrier frequencies overlap; and wherein said determining of said interference is based on comparing differences in said at least one parameter between carriers with overlapping and non-overlapping carrier frequencies.

6. The method of claim 5, wherein said first and second communication method are different in that the spacing between their carriers are different; and wherein said determining of said interference is based on comparing differences in said parameters on a per carrier or per carrier group basis thereby taking into account the difference in spacing between their carriers.

7. Method of any of the preceding claims, further comprising recommending a solution for solving the interference, based on said step of determining said interference.

8. System adapted or suitable for determining interference in a first communication system by a second communication system, said first communication system being operable in a first frequency band and based on a first communication method, said second communication system being operable in a second frequency band and based on a second communication method, wherein said first and second frequency band at least partially overlap and said first and second communication method are at least in part different, the first communication system being connected to the system via a connection, the system comprising:

   a data collector adapted for obtaining through said connection at least one parameter of said first communication system; and
   a processor adapted for determining said interference based on said at least one parameter by exploiting the differences between the first and second communication method.

9. The system of claim 8, wherein said at least one parameter is anyone of the following:

   a parameter representative for the signal-to-noise ratio (SNR) of a signal received by said first communication system;
   a parameter representative for the bit loading of a signal received by said first communication system;
   a parameter representative for the QLN of a signal received by said first communication system;
   a computed estimate of the SNR and/or bit loading and/or QLN based the SNR and/or bit loading and/or QLN of signals received by said first communication system and/or based on one or more operational parameters; and/or
   a parameter representative for a difference between the SNR and/or bit loading and/or QLN of signals received by said first communication system and reference values achievable for those absent interference.

10. The system of claim 8 or 9, wherein said first and second communication methods are different in at least their frequency spectra in an overlap frequency band in which said first and second frequency bands overlap; the system further being adapted for determining said interference based on comparing differences in said at least one parameter across said overlap frequency band.

11. The system of claim 10, wherein within said overlap frequency band said second communication method has one or more frequency bands with a substantially lower up to zero channel response; and wherein the system is adapted for determining said interference based on comparing an average performance in a neighbourhood of said one or more frequency bands with an average performance in said one or more frequency bands.

12. The system of claim 8 or 9, wherein said first and second communication method are different in that only a portion of their respective carrier frequencies overlap; and the system further being adapted for determining said interference based on comparing differences in said at least one parameter between carriers between carriers with overlapping and non-overlapping carrier frequencies.

13. The system of claim 12, wherein said first and second communication method are different in that a spacing between their carriers is different; and wherein the system is adapted for determining said interference based on comparing differences in said at least parameter on a per carrier or per carrier group basis thereby taking into account the difference in said spacing.

14. The system of any of the preceding system claims, said system being a network analyser.

15. A computer program product, operable on a processing engine, for executing any of the computations of any one or more of the steps of the methods of any one of the claims 1 to 7.

Power line network

10

Computer

50

Phone line

Ethernet

Coupling

30

Residential gateway
DSL modem

80

20

Game console

60

Smart TV (or set-top-box)

70

100

110

Access
network

Customer premise
Home network

Figure 1

Figure 2

Figure 3

Figure 4

Figure 5

Figure 6

Figure 7

Europäisches
Patentamt

European
Patent Office

Office européen
des brevets

## EUROPEAN SEARCH REPORT

Application Number

EP 14 30 5473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/225672 A1 (YI XIAOCHUAN [US] ET AL) 10 September 2009 (2009-09-10) | 1-3, 7-10,14, 15 | INV. H04L1/20 H04L12/24 H04B3/54 H04M3/30 |
| A | * figures 1,4 * <br> * paragraphs [0008], [0010], [0013] - [0016], [0029], [0030] * <br> ----- | 4-6, 11-13 | |
| X | US 6 760 847 B1 (LIU GIN [CA] ET AL) 6 July 2004 (2004-07-06) | 1-3, 7-10,14, 15 | |
| A | * figures 1,2,4; table 1 * <br> * column 4, lines 15-25 * <br> * column 6, lines 1-10 * <br> * column 7, lines 52-54 * <br> * column 8, line 8 - column 9, line 18 * <br> ----- | 5,6, 11-13 | |

TECHNICAL FIELDS
SEARCHED      (IPC)

H04L
H04M
H04B

The present search report has been drawn up for all claims

| Place of search | Date of completion of the search | Examiner |
|---|---|---|
| The Hague | 15 August 2014 | Marjanovic, Djordje |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**  EP 14 30 5473

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2014

| Patent document cited in search report | Publication date | Patent family member(s) | Publication date |
|---|---|---|---|
| US 2009225672 A1 | 10-09-2009 | NONE | |
| US 6760847 B1 | 06-07-2004 | CA 2337592 A1<br>US 6760847 B1 | 13-10-2001<br>06-07-2004 |

EPO FORM P0459

For more details about this annex : see Official Journal of the European Patent Office, No. 12/82